# EUROPÄISCHE PATENTSCHRIFT

(11) **EP 2 855 970 B1**
(45) Veröffentlichungstag und Bekanntmachung des Hinweises auf die Patenterteilung: **24.08.2016**
(21) Anmeldenummer: 13721774.1
(22) Anmeldetag: 13.05.2013
(51) Int. Cl.: F16G 3/02

(54) **GURTENDEKÖRPER ODER GURTSEGMENTENDEKÖRPER**
BELT END BODY OR BELT SEGMENT END BODY
CORPS D'EXTRÉMITÉ DE SANGLE OU CORPS D'EXTRÉMITÉ DE SEGMENT DE SANGLE

(30) Priorität: 24.05.2012 DE 102012104477
(43) Veröffentlichungstag der Anmeldung: 08.04.2015
(73) Patentinhaber: ContiTech Transportbandsysteme GmbH, 30165 Hannover (DE)
(72) Erfinder: MÖSCHEN-SIEKMANN, Michael, 37176 Nörten-Hardenberg (DE); HÜLS, Achim, 30890 Barsinghausen (DE)
(74) Vertreter: Finger, Karsten
(86) Internationale Anmeldenummer: PCT/EP2013/059778
(87) Internationale Veröffentlichungsnummer: WO 2013/174666

(56) Entgegenhaltungen:
- WO-A1-2011/036166
- DE-C- 323 930
- US-A- 224 951

## Beschreibung

Die Erfindung betrifft einen Gurtendekörper oder Gurtsegmentendekörper gemäß dem Oberbegriff des Anspruchs 1.

Es ist seit langem bekannt, Gurte zur Förderung von Schüttgut und anderen Fördergütern zu verwenden. Dabei werden die Gurte endlos geschlossen in Förderanlagen eingesetzt. Diese Anlagen weisen Antriebsrollen oder -trommeln auf, um den Gurt anzutreiben, und weitere Stütz-, Umlenk- oder Umkehrrollen oder -trommeln, um den Gurt zu führen, abzustützen und auch z.B. an den Enden der Anlage wieder umzulenken, d.h. umzudrehen. Zur Führung und zum Antrieb des Fördergurtes mittels dieser Trommel ist ein möglichst flächiger Kontakt zwischen der Unterseite des Gurtes und der Oberseite (Oberfläche) der Trommeln erforderlich. An diesen Umkehrstellen kann auch die Entladung des Fördergutes stattfinden, in dem der Fördergurt über die Umkehrtrommel umgedreht wird und damit das Fördergut von Fördergurt herunter fällt.

Bekannt ist auch, dass die Fördergurte offen hergestellt und erst in einem folgenden Fertigungsschritt über eine Verbindungsstelle zu dem endlosen Fördergurt der Förderanlage geschlossen werden. Wird ein Fördergurt in mehreren Teilen hergestellt, so werden mehrere offene Gurtsegmente über entsprechend viele Verbindungsstellen zu einem endlosen Fördergurt geschlossen.

Hierbei ist es üblich, die Enden der Gurte oder Gurtsegmente mit mechanischen Verbindungselementen zu versehen, die dem einfachen und schnellen Verbinden der Enden zu einem geschlossenen Gurt dienen. Diese Verbindungselemente sind auf ihrer der Verbindungsstelle abgewandten Seite mittels Klemmung mit den Festigkeitsträgern des Gurtes oder Gurtsegmentes verbunden. Die Klemmung ist derart ausgeführt, dass sie die für die Festigkeitsträger zulässigen Zugkräfte übertragen kann siehe zum Beispiel WO 2011/036166.

Nachteilig ist hierbei, dass diese mechanischen Verbindungselemente im Vergleich zu dem übrigen Gurt starr ausgebildet sind und sich daher nicht so an die Oberfläche der Trommeln anlegen können wie die elastisch ausgebildeten Flächen des Gurtes. Hierdurch liegen die Festigkeitsträger des Gurtes an diesen Stellen nicht in der neutralen Phase und die mechanischen Verbindungsstellen werden bei jedem Umlauf um eine Antriebs- oder Umlenkrolle durch Biege- und Scherkräfte belastet, welches insbesondere auf die Festigkeitsträger des Gurtes wirken. Somit stellt die Verwendung von mechanischen Verbindungselementen ein Problem bei Fördergurten dar, da hierdurch die Lebensdauer des Gurtes durch das sich permanent mit jedem Umlauf wiederholende Abknicken der Festigkeitsträger verringert wird.

Dieser Nachteil kommt insbesondere dann zum Tragen, wenn der Durchmesser der Trommeln vergleichsweise gering ist zum Ausmaß des Gurtendekörpers oder Gurtsegmentendekörpers in Längsrichtung A. So sind bekannte Gurtendekörper oder Gurtsegmentendekörper aus diesen Gründen für große Umlenkradien üblich. Bei der Anwendung von Fördergurten z.B. als Skidgleitgurt sind jedoch kleinere Umlenktrommeln mit typischerweise einem Durchmesser von z.B. ca. 180 mm im Einsatz. Bei einem derartigen Durchmesser führen die bekannten Ausführungen der mechanischen Verbindungselemente aufgrund der dynamischen Beanspruchungen zu einem frühzeitigen Bruch der Festigkeitsträger.

Die Aufgabe der vorliegenden Erfindung ist es, einen Gurtendekörper oder Gurtsegmentendekörper der eingangs beschriebenen Art bereit zu stellen, durch den die Lebensdauer eines Gurtes erhöht werden kann. Insbesondere sollen Biege- und Scherkräfte auf die Festigkeitsträger des Gurtes durch den Gurtendekörper oder Gurtsegmentendekörper vermieden bzw. zumindest reduziert werden.

Die Aufgabe wird erfindungsgemäß durch die Merkmale des kennzeichnenden Teils des Anspruchs 1gelöst. Vorteilhafte Weiterbildungen sind in den Unteransprüchen beschrieben.

Somit betrifft die vorliegende Erfindung einen derart ausgebildeten Gurtendekörper oder Gurtsegmentendekörper gemäß dem Oberbegriff des Anspruchs 1, dass sich die ungeklemmten Bereiche der geklemmten Festigkeitsträger im Betrieb immer in der neutralen Phase befinden.

Der Erfindung liegt der Gedanke zugrunde, dass die Festigkeitsträger eines Gurtes öder Gurtsegments wie z.B. bei einem Fördergurt beim Umlaufen über Antriebs- oder Umlenkungsrollen oder -trommeln durch Biege- und Scherkräfte belastet und geschwächt werden. Dabei nehmen die Festigkeitsträger die Zugkräfte in Längsrichtung A auf und liegen, ebenso wie die Gelenkpunkte der Verbindung des Gurtes bzw. der Gurtsegmente, in der neutralen Phase des Gurtes oder Gurtsegments. Die starren Gurtendekörper oder Gurtsegmentendekörper lassen sich nicht um die zylindrischen Körper der Antriebs- oder Umlenkungstrommeln biegen, so dass die Festigkeitsträger in den Bereichen, wo sie aus dem Gurtendekörper oder Gurtsegmentendekörper austreten, beim Umlauf um die Antriebs- oder Umlenkungstrommeln abgeknickt werden. Diese Belastung kann die Festigkeitsträger beschädigen und ihre Lebensdauer verringern.

Erfindungsgemäß wird durch die Ausführung der Klemmung samt Verbindungselementen eine Knickung, Scherung oder Biegung der Festigkeitsträger und damit eine Schwächung dieser ausgeschlossen. Genauer gesagt wird erfindungsgemäß dieses Abknicken der Festigkeitsträger dadurch vermieden, indem eine permanente Führung der aus dem Gurtendekörper oder Gurtsegmentendekörper herausragenden Festigkeitsträger in der neutralen Phase erreicht wird. Hierdurch kann erfindungsgemäß eine Knickung, Scherung oder Biegung der Festigkeitsträger unterhalb des zulässigen Biegeradius verhindert werden. Ferner erfolgt auf diese Weise bei entsprechender Ausgestaltung der halbschalenförmigen Einbuchtung überhaupt keine Um- oder Auslenkung des Zugsträgers. Gemäß einem Aspekt der Erfindung weist die Fläche des Gurtendekörpers oder Gurtsegmentendekörpers, die vorgesehen ist, auf zylindrischen Körpern einer Gurtförderanlage abzurollen, eine halbschalenförmige Einbuchtung aufweist.

Aufgrund dieser halbschalenförmigen Einbuchtung kann der Gurtendekörper oder Gurtsegmentendekörper enger an der Oberfläche der Trommel anliegen als bei einem eben ausgebildeten Unterseite des Gurtendekörpers oder Gurtsegmentendekörpers. Hierdurch werden die Gurtenden oder Gurtsegmentenden des Gurtes oder des Gurtsegments durch die Trommeln weniger bis gar nicht geknickt und dadurch die Festigkeitsträger auch weniger bis gar nicht durch Biege- und Scherkräfte belastet. Mit anderen Worten wird durch eine geometrische Anpassung der Außenseite des Verbindungsteiles an die Geometrie der Umlauftrommel eine weitestgehend permanente Auflage während des Umlaufes und hierdurch eine Führung der Festigkeitsträger in der neutralen Phase erreicht. Auch werden hierdurch eine Querbewegung zur Trommelachse und eine damit verbundene schlagartige Scherkraft auf die Festigkeitsträger während des Auf- und Ablaufens auf die Trommel vermieden.

Diese Erfindung kommt insbesondere dann zum Tragen, wenn im Vergleich zur Ausdehnung des Gurtendekörpers oder Gurtsegmentendekörpers in Längsrichtung A die Trommeln einen geringen Durchmesser aufweisen. Mit anderen Worten ist der Abstand der aus dem Gurtendekörper oder Gurtsegmentendekörper austretenden Festigkeitsträger und damit deren Belastung durch Biege- und Scherkräfte um so größer, desto länger der Gurtendekörper oder Gurtsegmentendekörper in Längsrichtung A bzw. desto geringer der Durchmesser der Trommeln ist.

Unter einer halbschalenförmigen Einbuchtung ist dabei eine Abflachung der Seite des Gurtendekörpers oder Gurtsegmentendekörpers zu verstehen, mit der der Gurtendekörper oder Gurtsegmentendekörper auf der Oberfläche der Trommeln aufliegen kann. Diese Ausbuchtung entspricht in ihrer Form im Wesentlichen der zylindrischen Oberfläche der Trommeln und hat einen im Wesentlichen flächigen Kontakt zu dieser Oberfläche.

Gemäß einem weiteren Aspekt der Erfindung weist die halbschalenförmige Einbuchtung einen Radius R auf, der im Wesentlichen dem Radius R des zylindrischen Körpers entspricht.

Vorteilhaft ist hierbei, dass eine besonders gute flächige Führung des Gurtendekörpers oder Gurtsegmentendekörpers um die Trommeln erreicht wird, wenn die Oberfläche der Trommeln und die halbschalenförmige Einbuchtung des Gurtendekörpers oder Gurtsegmentendekörpers sich aufgrund ihrer möglich identischen Radien über eine möglichst große Kontaktfläche aneinander anliegen.

Gemäß einem weiteren Aspekt der Erfindung weist wenigstens eine der Klemmöffnungen eine Aufweitung auf.

Auch dieser Aspekt der vorliegenden Erfindung bewirkt, dass die Gurtenden oder Gurtsegmentenden des Gurtes oder des Gurtsegments durch die Trommeln weniger bis gar nicht geknickt und dadurch die Festigkeitsträger auch weniger bis gar nicht durch Biege- und Scherkräfte belastet werden. Dies wird in diesem Fall dadurch erreicht, dass wenigstens eine Klemmöffnung aufgeweitet ist. Hierunter ist zu verstehen, dass die Klemmöffnung nach außen hin eine zunehmende Größe aufweist, so dass sich ein Festigkeitsträger, der in der entsprechenden Klemmaussparung eingeklemmt ist, sich senkrecht zur Ebene des Gurtendekörpers oder Gurtsegmentendekörpers bewegen kann. Mit anderen Worten wird durch die Aufweitung des Übergangsbereiches zwischen Klemmbereich und Gurt der Festigkeitsträger beim Auf- und Ablaufen auf die Trommel immer im maximal zulässigen Biegeradius des Festigkeitsträgers unterstützt, so dass sich die Festigkeitsträger stets in der neutralen Phase des Gurtes befinden. Ferner erfolgt auf diese Weise bei entsprechender Ausgestaltung der Klemmöffnungen überhaupt keine Um- oder Auslenkung des Zugsträgers.

Wird nun ein Gurt oder ein Gurtsegment mit einem erfindungsgemäßen Gurtendekörper oder Gurtsegmentendekörper um den zylindrischen Körper einer Antriebs- oder Umlenkungstrommel einer Förderanlage geführt, so kann der Festigkeitsträger sich im Bereich der Aufweitung der Biegung um den zylindrischen Körper besser anpassen als bei einer Klemmung ohne aufgeweitete Klemmöffnung. Hierdurch werden Biege- und Scherkräfte auf den Festigkeitsträger vermieden.

Gemäß einem weiteren Aspekt der Erfindung weist die Aufweitung der wenigstens einen Klemmöffnung eine hyperbolische Form auf.

Vorteilhaft ist bei einer hyperbolischen oder auch kegelförmigen Aufweitung, dass diese einen gleichmäßigen und nach außen hin radial zunehmenden Verlauf aufweist. Hierdurch werden Kanten oder dergleichen im Bereich der Klemmöffnung vermieden, die zu einer Belastung und damit Beschädigung des Festigkeitsträgers führen könnten.

Gemäß einem weiteren Aspekt ist die Anordnung zum Zusammenkoppeln scharnierartig ausgebildet.

Vorteilhaft ist hierbei, dass ein Scharnier eine erprobte und bekannte mechanische Verbindung ist, die einfach und sicher an den Gurtenden bzw. Gurtsegmentenden vorgesehen werden, um ein Zusammenkoppeln zu realisieren.

Gemäß einem weiteren Aspekt ist die Anordnung zum Zusammenkoppeln lösbar ausgebildet.

Vorteilhaft ist hierbei, dass die Verbindung der Gurte oder Gurtsegmente wieder getrennt werden kann, ohne die Verbindung und bzw. ober Teile des Gurtes oder Gurtsegmentes zerstören zu müssen. Eine solche Trennung kann z.B. erforderlich sein, um verschließende oder beschädigte Segmente eines Gurtes auszutauschen oder auch einen endlos geschlossenen Gurt zu öffnen, um ihn als Ganzes aus der Gurtförderanlage entfernen zu können.

Gemäß einem weiteren Aspekt ist der Gurtendekörper oder Gurtsegmentendekörper vollständig in den Gurtquerschnitt integriert ausgebildet.

Vorteilhaft ist hierbei, dass die äußere Kontur des Gurtes auf diese Weise nicht verändert wird, insbesondere keine Flächen oder Elemente über die Oberfläche des Gurtes herausragen oder hinausstehen und hierdurch eine möglichst ebene Oberfläche des Gurtes auch nach Integration der erfindungsgemäßen Gurtendekörpers oder Gurtsegmentendekörper beibehalten werden kann. Ebenso ragt der Gurtendekörper oder Gurtsegmentendekörper nicht seitlich über die Maße des Gurtes hinaus.

Unter "vollständig in den Gurtquerschnitt integriert" ist hierbei zu verstehen, dass sich die Maße des Gurtes in den Bereichen, wo ein Gurtendekörper oder Gurtsegmentendekörper in den Gurt integriert ist, nicht bzw. nur unwesentlich von den Maßen in den übrigen Bereichen des Gurtes unterschieden.

Die vorliegende Erfindung betrifft auch einen Gurt oder ein Gurtsegment aus elastomerem Werkstoff mit einer Festigkeitsträgerlage aus in Längsrichtung A des Gurtes bzw. Gurtsegmentes verlaufenden, parallel zueinander angeordneten Stahlseilen, wobei jedes Gurtende oder Gurtsegmentende einen Gurtendekörper bzw. Gurtsegmentendekörper nach einem der Ansprüche 1 bis 5 aufweist.

Ein Ausführungsbeispiel und weitere Vorteile der Erfindung werden nachstehend im Zusammenhang mit den folgenden Figuren erläutert. Darin zeigt:
- Fig. 1: eine Schnittansicht eines Gurtendes oder Gurtsegmentendes;
- Fig. 2: eine perspektivische Ansicht zweier miteinander verbundener Gurtenden oder Gurtsegmentenden;
- Fig. 3: eine perspektivische schematische Ansicht zweier Gurte oder Gurtsegmente, die mittels zweier miteinander verbundener Gurtenden oder Gurtsegmentenden verbunden sind;
- Fig. 4: eine weitere perspektivische schematische Ansicht zweier Gurte oder Gurtsegmente, die mittels zweier miteinander verbundener Gurtenden oder Gurtsegmentenden verbunden sind;
- Fig. 5: eine perspektivische schematische Schnittansicht zweier Gurte oder Gurtsegmente, die mittels zweier miteinander verbundener Gurtenden oder Gurtsegmentenden verbunden sind; und
- Fig. 6: eine seitliche schematische Schnittansicht zweier Gurte oder Gurtsegmente, die mittels zweier miteinander verbundener Gurtenden oder Gurtsegmentenden verbunden sind.

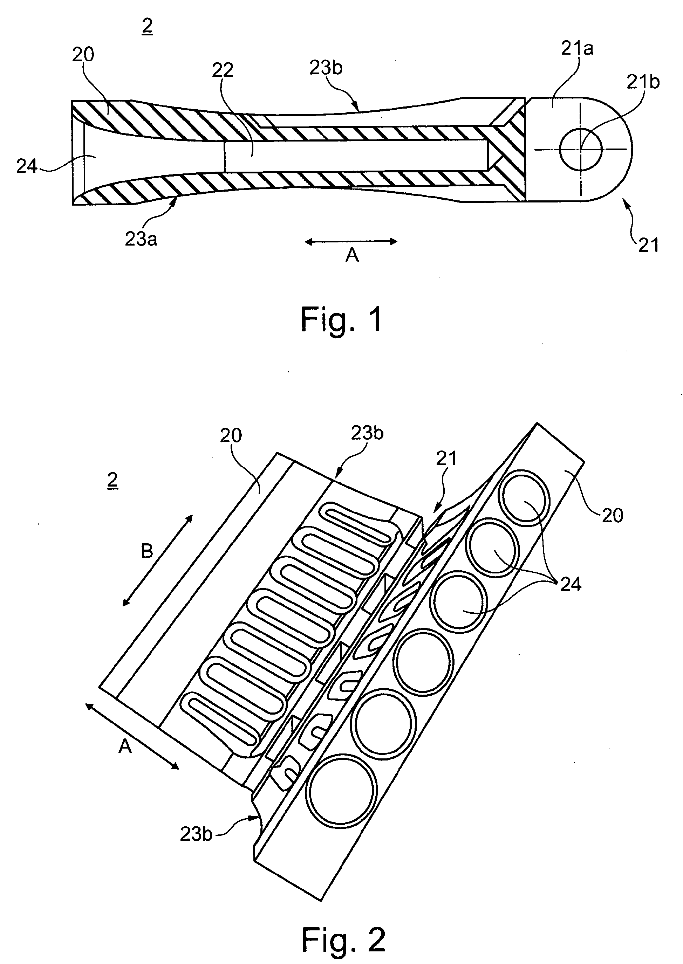

Fig. 1 zeigt eine Schnittansicht eines Gurtendes 2 oder Gurtsegmentendes 2. Fig. 2 zeigt eine perspektivische Ansicht zweier miteinander verbundener Gurtenden 2 oder Gurtsegmentenden 2. Das Gurtende 2 oder Gurtsegmentende 2 weist einen Gurtendekörper 20 oder Gurtsegmentendekörper 20 auf, der aus Metall, vorzugsweise aus Stahl besteht.

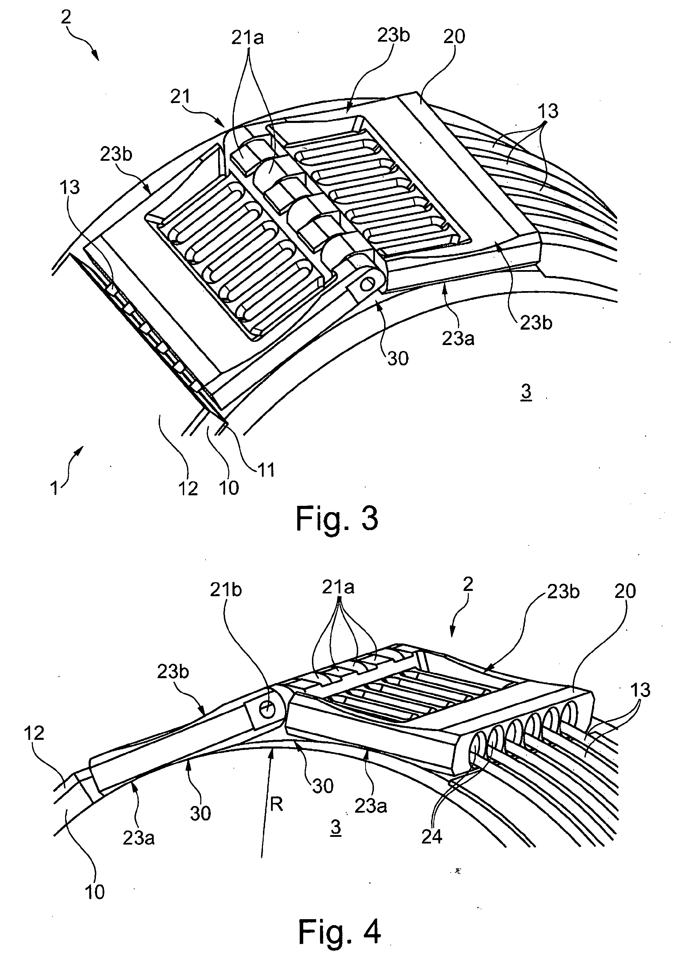

An seinem einen Ende weist der Gurtendekörper 20 oder Gurtsegmentendekörper 20 eine Anordnung 21 zum scharnierartigen Zusammenkoppeln mit einem weiteren, korrespondierenden Gurtendekörper 20 oder Gurtsegmentendekörper 20 auf. Diese Anordnung 21 weist jeweils zinnenartige Vorsprünge 21a auf, mittels derer die beiden Gurtendekörper 20 oder Gurtsegmentendekörper 20 scharnierartig ineinander greifen können. Diese zinnenartigen Vorsprünge 21a weisen jeweils Querbohrungen 21b auf, so dass die zinnenartigen Vorsprünge 21a mittels eines Kupplungsstabes (nicht dargestellt) zusammen gekoppelt werden können, siehe Fig. 3 bis 5.

An seinem anderen Ende weist der Gurtendekörper 20 oder Gurtsegmentendekörper 20 eine Mehrzahl von Klemmöffnungen 24 auf, die im Wesentlichen sich in Längsrichtung A erstrecken. Diese Klemmöffnungen 24 verlaufen vom Rand des Gurtendekörpers 20 oder Gurtsegmentendekörpers 20 in der Längsrichtung A des Gurtendes 2 oder Gurtsegmentendes 2 in den Gurtendekörper 20 oder Gurtsegmentendekörper 20 hinein und bilden dort eine Klemmaussparung 22 zur klemmenden Aufnahme eines Festigkeitsträgers 13 wie z.B. eines Stahlseiles 13 (vgl. Fig. 3 bis 6). Dabei sind die Klemmöffnungen 24 hyperbolisch oder auch kegelförmig ausgebildet, um eine Biegung der Festigkeitsträger 13 ohne Knicken im Bereich der Klemmöffnungen 24 zu erlauben. Hierdurch können sich die Festigkeitsträger 13 und damit die neutralen Phasen des Gurtes 1 oder Gurtsegmentes 1 besser der Biegung des Gurtes 1 oder Gurtsegmentes 1 z.B. bei einem Trommelumlauf anpassen.

Der Gurtendekörper 20 oder Gurtsegmentendekörper 20 weist eine flächige Ausdehnung in Längsrichtung A und in Querrichtung B auf, die der Ebene des Gurtes 1 oder Gurtsegmentes 1 entspricht. Mit dieser Fläche liegt der Gurt 1 oder das Gurtsegment 1 auf zylindrischen Körpern 3 wie z.B. Trommeln 3 auf, die der Abstützung, Umlenkung oder dem Antrieb des Gurtes 1 oder Gurtsegments 1 dienen (Unterseite des Gurtes 1 oder Gurtsegments 1), bzw. der Aufnahme und dem Transport von Fördergut (Oberseite des Gurtes 1 oder Gurtsegments 1). Auf dieser Oberseite und Unterseite weist der Gurtendekörper 20 oder Gurtsegmentendekörper 20 jeweils eine radiale Einbuchtung 23a, 23b auf, die an die Geometrie dieser Trommeln 3 angepasst ist. Auf diese Weise kann sich der Bereich der beiden scharnierartig verbundenen Gurtendekörper 20 oder Gurtsegmentendekörper 20 enger an derartige Trommeln mit geringem Durchmesser anpassen. Hierdurch werden die Gurtenden 2 oder Gurtsegmentenden 2 des Gurtes 1 oder des Gurtsegments 1 durch die Trommeln 3 weniger geknickt und dadurch die Festigkeitsträger 13 auch weniger durch Biege- und Scherkräfte belastet.

Fig. 3 zeigt eine perspektivische schematische Ansicht zweier Gurte 1 oder Gurtsegmente 1, die mittels zweier miteinander verbundener Gurtenden 2 oder Gurtsegmentenden 2 verbunden sind. Fig. 4 zeigt eine weitere perspektivische schematische Ansicht zweier Gurte 1 oder Gurtsegmente 1, die mittels zweier miteinander verbundener Gurtenden 2 oder Gurtsegmentenden 2 verbunden sind.

In beiden Darstellungen der Fig. 3 und 4 ist auf der linken Seite der Gurt 1 oder das Gurtsegment 1 geschlossen mit seinem nach außen sichtbarem Aufbau dargestellt. Hierzu gehört der elastomere Gurtkörper 10 des Gurtes 1 oder Gurtsegments 1, in dem die Festigkeitsträger 13 eingebettet sind. In radialer Richtung R nach innen, d.h. zwischen dem Gurtkörper 10 und der Unterseite des Gurtes 1 oder Gurtsegments 1, weist der Gurt 1 oder das Gurtsegment 1 eine untere Deckschicht 11 auf, mit der der Gurt 1 oder das Gurtsegment 1 z.B. auf der Oberfläche 30 der Trommeln 3 abrollen kann. In radialer Richtung R nach außen, d.h. zwischen dem Gurtkörper 10 und der Oberseite des Gurtes 1 oder Gurtsegments 1, weist der Gurt 1 oder das Gurtsegment 1 eine obere Deckschicht 12 auf, auf der der Gurt 1 oder das Gurtsegment 1 Fördergut aufnehmen und transportieren kann.

Auf der rechten Seite der Fig. 3 und 4 ist jeweils das Innere des Gurtes 1 oder Gurtsegmentes 1 zu sehen. Hierbei sind die Festigkeitsträger 13 freigelegt dargestellt.

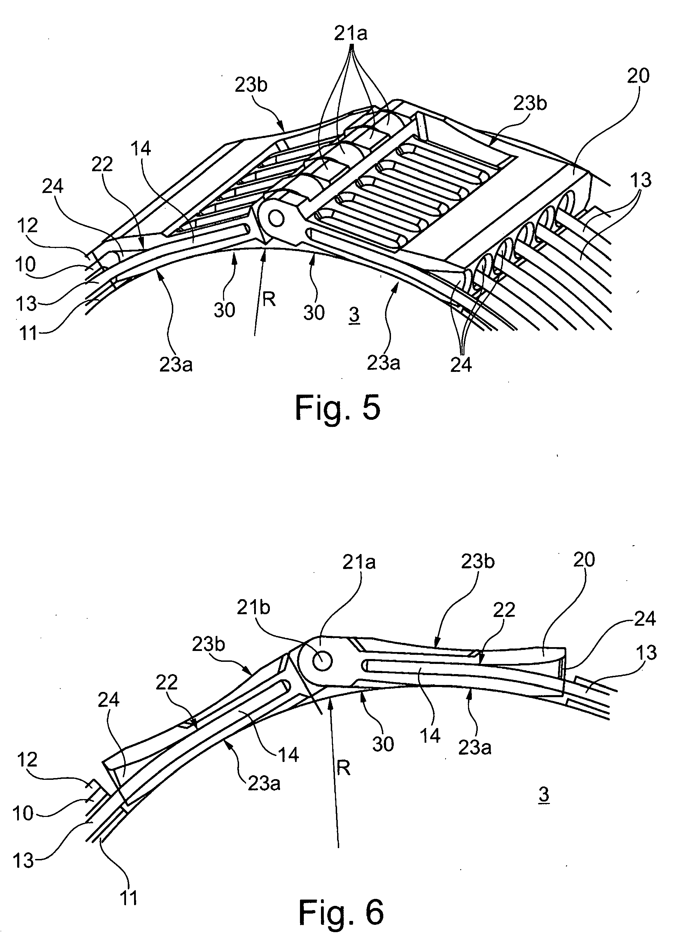

Fig. 5 zeigt eine perspektivische schematische Schnittansicht zweier Gurte 1 oder Gurtsegmente 1, die mittels zweier miteinander verbundener Gurtenden 2 oder Gurtsegmentenden 2 verbunden sind. Fig. 6 zeigt eine seitliche schematische Schnittansicht zweier Gurte 1 oder Gurtsegmente 1, die mittels zweier miteinander verbundener Gurtenden 2 oder Gurtsegmentenden 2 verbunden sind. Hierbei ist in beiden Darstellungen der Fig. 5 und 6 links der nach außen sichtbare Aufbau des Gurtes 1 oder Gurtsegments 1 und rechts dessen innerer Aufbau dargestellt.

Wie in den Fig. 5 und 6 auf beiden Seiten dargestellt ist, treten die Festigkeitsträger 13 aus dem elastomeren Grundkörper 10 heraus und werden durch die Klemmöffnungen 24 in das Innere des jeweiligen Gurtendekörpers 20 oder Gurtsegmentsendekörpers 20 geführt. Dort werden die Enden der Festigkeitsträger 13 durch Klemmung gehalten, so dass die Gurtendekörper 20 oder Gurtsegmentsendekörper 20 sicher über diese geklemmten Bereiche 14 der Festigkeitsträger 13 mit dem Gurt 1 oder Gurtsegment 1 verbunden sind. Dabei legen sich die ungeklemmten Bereiche der Festigkeitsträger 13 im Bereich der Klemmöffnungen 24 an dessen innere Oberfläche an, ohne am Übergang zwischen Klemmaussparung 22 und Klemmöffnung 24 abzuknicken oder gebogen zu werden. Auch ist die hyperbolische Ausgestaltung der Klemmöffnungen 24 derart in Bezug auf den verwendeten Radius R der Trommeln 3 gewählt, dass auch beim Austritt der Festigkeitsträger 13 aus den Klemmöffnungen 24 kein Knicken oder Biegen der ungeklemmten Bereiche der Festigkeitsträger 13 auftreten kann. Auf diese Weise werden die ungeklemmten Bereiche der Festigkeitsträger 13 in der neutralen Phase des Gurtes 1 oder Gurtsegments 1 knick- und biegungsfrei zwischen der Klemmung in dem jeweiligen Gurtende 2 oder Gurtsegmentsende 2 und dem elastomeren Grundkörper 10 des Gurtes 1 oder Gurtsegments 1 geführt. Mit anderen Worten werden die ungeklemmten Bereiche der Festigkeitsträger 13 hierdurch stets im Betrieb im zulässigen Bereich des Biegeradius gebogen und ein Knicken, Scheren oder Biegen unterhalb des für die Zugträger zulässigen Biegeradius ausgeschlossen.

Wie ebenfalls in den Fig. 5 und 6 dargestellt, liegen die beiden Gurtendekörper 2 oder Gurtsegmentsendekörper 2 mit ihrer jeweiligen unteren radialen Einbuchtung 23a weitestgehend flächig auf der Oberfläche 30 der Trommeln 3 auf. Dies wird durch die Ausgestaltung der radialen Einbuchtungen 23a erreicht, indem diese zumindest im Wesentlichen mit einem Radius R eingebuchtet ausgeführt sind, der dem Radius R der Trommeln 3 entspricht. Hierdurch wird ein flächiger Kontakt zwischen radialer Einbuchtung 23a und Oberfläche 30 der Trommeln 3 und damit ein verbessertes Abrollen der Gurtendekörper 10 oder Gurtsegmentendekörper 10 auf den Trommeln 3 erreicht. Bei einer ebenen Beschaffenheit der Unterseiten der Gurtendekörper 10 oder Gurtsegmentendekörper 10 würde sich lediglich ein linienförmiger Kontakt in Querrichtung B ergeben. Hierdurch wäre der gesamte Gurtendekörper 10 oder Gurtsegmentendekörper 10 von der Oberfläche 30 der Trommeln 3 weiter beabstandet, wodurch auch die ungeklemmten Bereiche der Festigkeitsträger 13, gerade bei kleinen Trommeldurchmessern stärker geknickt und gebogen werden würden. Außerdem würde ein linienförmiger Kontakt die Oberfläche 30 der Trommeln 3 deutlich stärker belasten als ein flächiger Kontakt.

### Bezugszeichenliste

### (Teil der Beschreibung)

- A: Längsrichtung des Gurtes 1 bzw. Gurtsegments 1 und des Gurtendes 2 oder Gurtsegmentendes 2
- B: Querrichtung des Gurtes 1 bzw. Gurtsegments 1 und des Gurtendes 2 oder Gurtsegmentendes 2
- R: Radius des zylindrischen Körpers 3
- 1: Gurt oder Gurtsegment
- 10: elastomerer Grundkörper des Gurtes 1 oder Gurtsegments 1
- 11: untere Deckschicht des Gurtes 1 oder Gurtsegments 1
- 12: obere Deckschicht des Gurtes 1 oder Gurtsegmentes 1
- 13: Festigkeitsträger des Gurtes 1 oder Gurtsegments 1 sowie dessen ungeklemmter Bereich
- 14: geklemmter Bereich des Festigkeitsträgers 13
- 2: Gurtende oder Gurtsegmentende
- 20: Gurtendekörper oder Gurtsegmentendekörper
- 21: Anordnung zum scharnierartigen Zusammenkoppeln
- 21a: zinnenartige Vorsprünge der Anordnung 21
- 21b: Querbohrungen der zinnenartigen Vorsprünge 21a
- 22: Klemmaussparung zur klemmenden Aufnahme eines Festigkeitsträgers
- 22a: Klemmbereich der Klemmaussparung 22
- 23a: erste (untere) radiale Einbuchtung des Gurtendekörpers 20 oder Gurtsegmentendekörpers 20
- 23b: zweite (obere) radiale Einbuchtung des Gurtendekörpers 20 oder Gurtsegmentendekörpers 20
- 24: Klemmöffnung der Klemmaussparung 22
- 3: zylindrischer Körper, insbesondere Antriebs-, Führungs- oder Stütztrommel
- 30: Oberfläche des zylindrischen Körpers 3

## Patentansprüche

1. Gurtendekörper (20) oder Gurtsegmentendekörper (20), mit
einer Anordnung (21) zum Zusammenkoppeln mit einem weiteren korrespondieren Gurtendekörper (20) oder Gurtsegmentendekörper (20), und
einer Mehrzahl von Klemmöffnungen (24) und Klemmaussparungen (22) zur geklemmten Aufnahme von Festigkeitsträgern (13) eines Gurtes (1) oder Gurtsegments (1),
wobei sich die Anordnung (21) zum Zusammenkoppeln und die Klemmöffnungen (24) im Wesentlichen in Längsrichtung A gegenüber liegen,
**dadurch gekennzeichnet, dass**
die Fläche des Gurtendekörpers (20) oder Gurtsegmentendekörpers (20), die vorgesehen ist, auf zylindrischen Körpern (3) einer Gurtförderanlage abzurollen, eine halbschalenförmige Einbuchtung (23a) aufweist, und/oder dass
wenigstens eine der Klemmöffnungen (24) eine Aufweitung aufweist,
so dass im gebrauch sich die ungeklemmten Bereiche der geklemmten Festigkeitsträger (13) im Betrieb immer in der neutralen Phase befinden.

2. Gurtendekörper (20) oder Gurtsegmentendekörper (20) nach Anspruch 1,
wobei die halbschalenförmige Einbuchtung (23a) einen Radius R aufweist, der im Wesentlichen dem Radius R des zylindrischen Körpers (3) entspricht.

3. Gurtendekörper (20) oder Gurtsegmentendekörper (20) nach Anspruch 1,
wobei die Aufweitung der wenigstens einen Klemmöffnung (24) eine hyperbolische Form aufweist.

4. Gurtendekörper (20) oder Gurtsegmentendekörper (20) nach einem der vorherigen Ansprüche,
wobei die Anordnung (21) zum Zusammenkoppeln scharnierartig ausgebildet ist.

5. Gurtendekörper (20) oder Gurtsegmentendekörper (20) nach einem der vorherigen Ansprüche,
wobei die Anordnung (21) zum Zusammenkoppeln lösbar ausgebildet ist.

6. Gurtendekörper (20) oder Gurtsegmentendekörper (20) nach einem der vorherigen Ansprüche,
wobei der Gurtendekörper (20) oder Gurtsegmentendekörper (20) vollständig in den Gurtquerschnitt integriert ausgebildet ist.

7. Gurt (1) oder Gurtsegment (1) aus elastomerem Werkstoff mit einer Festigkeitsträgerlage aus in Längsrichtung A des Gurtes (1) bzw. Gurtsegmentes (1) verlaufenden, parallel zueinander angeordneten Stahlseilen (13),
wobei jedes Gurtende (2) oder Gurtsegmentende (2) einen Gurtendekörper (20) bzw. Gurtsegmentendekörper (20) nach einem der Ansprüche 1 bis 6 aufweist.

## Claims

1. Belt end body (20) or belt segment end body (20), having
an arrangement (21) for coupling to a further, corresponding belt end body (20) or belt segment end body (20), and
a plurality of clamping openings (24) and clamp recesses (22) for receiving reinforcing members (13) of a belt (1) or belt segment (1) in clamped manner,
wherein the arrangement (21) for coupling and the clamping openings (24) lie substantially opposite one another in the longitudinal direction A,
**characterized in that**
the surface of the belt end body (20) or belt segment end body (20) that is provided for rolling on cylindrical bodies (3) of a belt conveying system has a cup-shaped hollow (23a), and/or **in that**
at least one of the clamping openings (24) has a widening,
such that, during use, the unclamped regions of the clamped reinforcing members (13) are always in the neutral phase during operation.

2. Belt end body (20) or belt segment end body (20) according to Claim 1,
wherein the cup-shaped hollow (23a) has a radius R which corresponds substantially to the radius R of the cylindrical body (3).

3. Belt end body (20) or belt segment end body (20) according to Claim 1,
wherein the widening of the at least one clamping opening (24) is hyperbolic in shape.

4. Belt end body (20) or belt segment end body (20) according to any of the preceding claims,
wherein the arrangement (21) for coupling is formed in the manner of a hinge.

5. Belt end body (20) or belt segment end body (20) according to any of the preceding claims,
wherein the arrangement (21) for coupling is detachable in form.

6. Belt end body (20) or belt segment end body (20) according to any of the preceding claims,
wherein the belt end body (20) or belt segment end body (20) takes a form that is entirely integrated into the belt cross section.

7. Belt (1) or belt segment (1) made from elastomer material, having a reinforcing member layer made from mutually parallel steel cables (13) that extend in the longitudinal direction A of the belt (1) or belt segment (1),
wherein each belt end (2) or belt segment end (2) has a belt end body (20) or belt segment end body (20) according to one of Claims 1 to 6.

## Revendications

1. Corps d'extrémité de sangle (20) ou corps d'extrémité de segment de sangle (20), comprenant
un agencement (21) pour l'accoupler à un corps d'extrémité de sangle (20) ou corps d'extrémité de segment de sangle (20) correspondant supplémentaire, et
une pluralité d'ouvertures de serrage (24) et d'évidements de serrage (22) pour la réception avec serrage de renforts (13) d'une sangle (1) ou d'un segment de sangle (1),
l'agencement (21) d'accouplement et les ouvertures de serrage (24) étant essentiellement opposés dans la direction longitudinale A,
**caractérisé en ce que**
la surface du corps d'extrémité de sangle (20) ou corps d'extrémité de segment de sangle (20), qui est prévue pour rouler sur des corps cylindriques (3) d'une installation de transport sur sangles, présente un renfoncement en forme de demi-coque (23a), et/ou
**en ce qu'**au moins l'une des ouvertures de serrage (24) présente un élargissement, de telle sorte que pendant l'utilisation, les régions non serrées des renforts serrés (13) se trouvent pendant le fonctionnement toujours dans la position neutre.

2. Corps d'extrémité de sangle (20) ou corps d'extrémité de segment de sangle (20) selon la revendication 1, dans lequel le renfoncement en forme de demi-coque (23a) présente un rayon R qui correspond essentiellement au rayon R du corps cylindrique (3).

3. Corps d'extrémité de sangle (20) ou corps d'extrémité de segment de sangle (20) selon la revendication 1, dans lequel l'élargissement de l'au moins une ouverture de serrage (24) présente une forme hyperbolique.

4. Corps d'extrémité de sangle (20) ou corps d'extrémité de segment de sangle (20) selon l'une quelconque des revendications précédentes, dans lequel l'agencement (21) pour l'accouplement est réalisé sous forme de charnière.

5. Corps d'extrémité de sangle (20) ou corps d'extrémité de segment de sangle (20) selon l'une quelconque des revendications précédentes, dans lequel l'agencement (21) pour l'accouplement est réalisé de manière desserrable.

6. Corps d'extrémité de sangle (20) ou corps d'extrémité de segment de sangle (20) selon l'une quelconque des revendications précédentes, dans lequel le corps d'extrémité de sangle (20) ou corps d'extrémité de segment de sangle (20) est réalisé de manière complètement intégrée dans la section transversale de la sangle.

7. Sangle (1) ou segment de sangle (1) en matériau élastomère comprenant une couche de renforts constitués de câbles d'acier (13) disposés parallèlement les uns aux autres et s'étendant dans la direction longitudinale A de la sangle (1) ou du segment de sangle (1), chaque extrémité de sangle (2) ou extrémité de segment de sangle (2) présentant un corps d'extrémité de sangle (20) ou corps d'extrémité de segment de sangle (20) selon l'une quelconque des revendications 1 à 6.
